# EUROPEAN PATENT APPLICATION

(11) **EP 1 411 439 A2**
(43) Date of publication of application: **21.04.2004**
(21) Application number: 03023297.9
(22) Date of filing: 15.10.2003
(51) Int. Cl.: G06F 13/12

(54) **Playback apparatus and playback method**

(30) Priority: 17.10.2002 JP 2002302420
(71) Applicant: FUJITSU LIMITED, Kawasaki-shi, Kanagawa 211-8588 (JP)
(72) Inventor: Shimizu, Seiya, Fujitsu Limited, Kawasaki-shi Kanagawa 211-8588 (JP)
(74) Representative: HOFFMANN - EITLE

(57) **Abstract**

A playback apparatus that is used for receiving and continuously playing back a plurality of video sources delivered via a network. Video sources Vₘ continuously played back in content and the display time of the video sources Vₘ are extracted from playback information described in a playback scenario read into a scenario management section via the network. The video sources Vₘ are rearranged in order of display time. The distribution of the video sources Vₘ among a plurality of decoder modules Dₙ, a playback schedule, and a schedule of switching a changeover switch are determined. By doing so, the plurality of video sources Vₘ are continuously played back.

## Description

### BACKGROUND OF THE INVENTION

### (1) Field of the Invention

This invention relates to an apparatus and method for playing back a plurality of pieces of video information, more particularly, to an apparatus and method for receiving and playing back a plurality of pieces of video information delivered via a network.

### (2) Description of the Related Art

In recent years, streaming delivery of content, such as music and animations, has been performed extensively via a network, such as the Internet.

For example, to insert a commercial film into content streaming delivery of which is being made, a plurality of pieces of video information (video sources) may be continuously played back.

Furthermore, a plurality of streaming videos have been continuously played back in multimedia presentation by, for example, the synchronized multimedia integration language (SMIL), being a World-Wide Web Consortium (W3C) standard, learning systems (e-Learning) using a network, and the like.

Conventional streaming video delivery in which a plurality of video sources are continuously played back via a network will now be described.

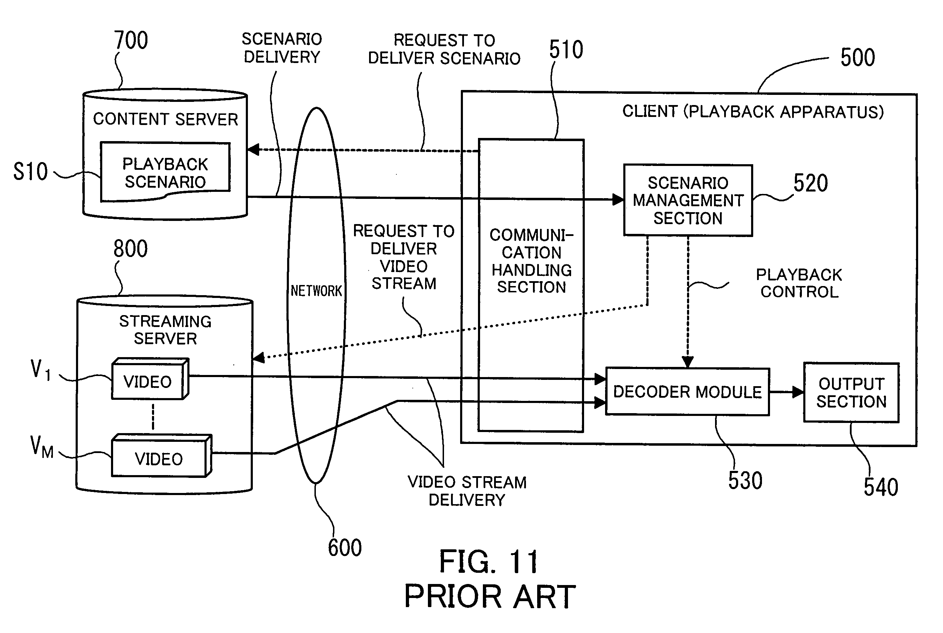

Fig. 11 is a view showing the rough structure of a conventional streaming video delivery system.

This conventional streaming video delivery system comprises a client (playback apparatus) 500, a network 600, a content server 700, and a streaming server 800.

The playback apparatus 500 includes a communication handling section 510, a scenario management section 520, a decoder module 530 including a streaming buffer (not shown) and a decoder (not shown), and an output section 540.

In Fig. 11, the flow of data and the flow of a control signal are shown by solid and dotted lines respectively.

A playback scenario S10 stored in the content server 700 is sent to the communication handling section 510 in the playback apparatus 500 via the network 600 in accordance with a request to deliver a scenario. The order in which video sources Vₘ (m=1,..., M) are played back and the like are described in the playback scenario S10, which corresponds to, for example, an ASX file based on the Windows Media Technology developed by Microsoft Corporation for processing media. The scenario management section 520 informs the streaming server 800 of a streaming video delivery request in accordance with the order of video playback described in the playback scenario S10. After being stored temporarily in the streaming buffer (not shown) in the decoder module 530 used for performing stable video playback by alleviating the instability of the network 600 as a bit stream corresponding to, for example, several seconds to several tens of seconds, the video source Vₘ delivered from the streaming server 800 are processed in order of delivery by the decoder (not shown), are outputted from the output section 540, and are displayed on a display device or the like.

When it is time to switch the video source Vₘ described in the playback scenario S10, the scenario management section 520 exerts control over the decoder module 530 to terminate playback. As a result, the decoder module 530 performs a termination process, such as erasing data stored in the streaming buffer (not shown) and stopping the decoder. After the termination process being completed, the scenario management section 520 makes a request to the streaming server 800 for streaming delivery of the next video source Vₘ and gives the decoder module 530 instructions to begin playback.

From the viewpoint of a time axis, the state of this playback by the decoder module 530 is as follows.

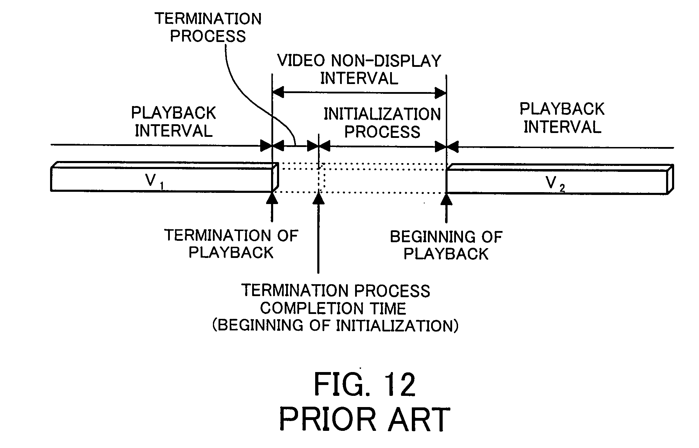

Fig. 12 is a view for describing the operation of a decoder module performed at the time of continuously playing back a plurality of video sources by a conventional method.

When the video sources V₁ and V₂ are continuously played back, a termination process is performed first after the playback of the video source V₁ being completed, then an initialization process including communicating with the streaming server 800 and buffering a bit stream is performed, and then the playback of the video source V₂ is begun.

By the way, to repeatedly play back a video source from a specified position, an information playback apparatus for seamlessly displaying images without harming the continuity of an animation is disclosed (for example, see Japanese Unexamined Patent Publication No. 2001-203977, paragraph numbers [0017]-[0040] and Fig. 1).

The information playback apparatus disclosed in Japanese Unexamined Patent Publication No. 2001-203977 includes two decoders. One decoder plays back a video source. The other decoder plays back the video source which has repeatedly been played back, and puts it into a pause state. When instructions to repeatedly play back are given, the decoder which outputs an image will be changed. This enables a continuous display of a video source.

With the conventional playback apparatus, however, time taken to perform the termination process and initialization process as shown in Fig. 12 corresponds to a non-display interval where a video image will not be outputted. That is to say, a video cannot be continuously played back.

Time taken to perform buffering included in the initialization process has been shortened significantly by improving a delivery system, but it is difficult to reduce other factors in the time lag.

Moreover, with the information playback apparatus disclosed in Japanese Unexamined Patent Publication No. 2001-203977, a plurality of decoders are used for continuously playing back a video source from the position from which repeated playback is specified. However, the position from which repeated playback is performed is determined on the basis of designation by a user. That is to say, this information playback apparatus cannot realize the automatic continuous playback of a plurality of video sources on the basis of a playback scenario inputted.

### SUMMARY OF THE INVENTION

The present invention was made under the background circumstances as described above. An object of the present invention is to provide a playback apparatus which can continuously play back a plurality of streaming videos without non-display time.

Another object of the present invention is to provide a playback method by which a plurality of streaming videos can be continuously played back without non-display time.

In order to achieve the above first object, a playback apparatus for receiving and playing back a plurality of pieces of video information delivered via a network is provided. This playback apparatus comprises a plurality of decoder modules for decoding the plurality of pieces of video information, a scenario management section for reading a playback scenario where playback information regarding the plurality of pieces of video information is described, for determining a playback schedule according to the playback information, and for exercising distribution of the plurality of pieces of video information among the plurality of decoder modules and switching control over output from the plurality of decoder modules, an output switching section for switching output from the plurality of decoder modules under the switching control, a communication handling section for making a request via the network to deliver the playback scenario, receiving the playback scenario via the network, making a request via the network to deliver the plurality of pieces of video information, and receiving the plurality of pieces of video information via the network, and an output section for outputting the plurality of pieces of video information.

In order to achieve the above second object, a playback method for receiving and playing back a plurality of pieces of video information delivered via a network is provided. This playback method comprises the steps of reading a playback scenario where playback information regarding the plurality of pieces of video information is described, determining a playback schedule according to the playback information, and exercising, in accordance with the playback schedule, distribution of the plurality of pieces of video information among a plurality of decoder modules and switching control over output from the plurality of decoder modules.

The above and other objects, features and advantages of the present invention will become apparent from the following description when taken in conjunction with the accompanying drawings which illustrate preferred embodiments of the present invention by way of example.

### BRIEF DESCRIPTION OF THE DRAWINGS

Fig. 1 is a view for describing the principles underlying a playback apparatus according to the present invention and the structure thereof.
Fig. 2 is a view for describing data structure indicative of a video source.
Fig. 3 is a flow chart showing a method for distributing M video sources among N decoder modules.
Fig. 4 is a view showing an example in which the distribution method shown in Fig. 3 is applied.
Fig. 5 is a view for describing the timing with which a decoder module is controlled.
Fig. 6 is a view for describing the timing with which a decoder module is controlled in the case of a delay in initialization exceeding a margin.
Fig. 7 is a view showing the structure of a playback apparatus according to an embodiment of the present invention.
Fig. 8 is the state transition diagram of a synchronization controller.
Fig. 9 is the state transition diagram of a video player.
Fig. 10 is a flow chart showing a method for distributing M video sources among N decoder modules in dynamic scheduling.
Fig. 11 is a view showing the rough structure of a conventional streaming video delivery system.
Fig. 12 is a view for describing the operation of a decoder module performed at the time of continuously playing back a plurality of video sources by a conventional method.

### DESCRIPTION OF THE PREFERRED EMBODIMENT

An embodiment of the present invention will now be described with reference to the drawings.

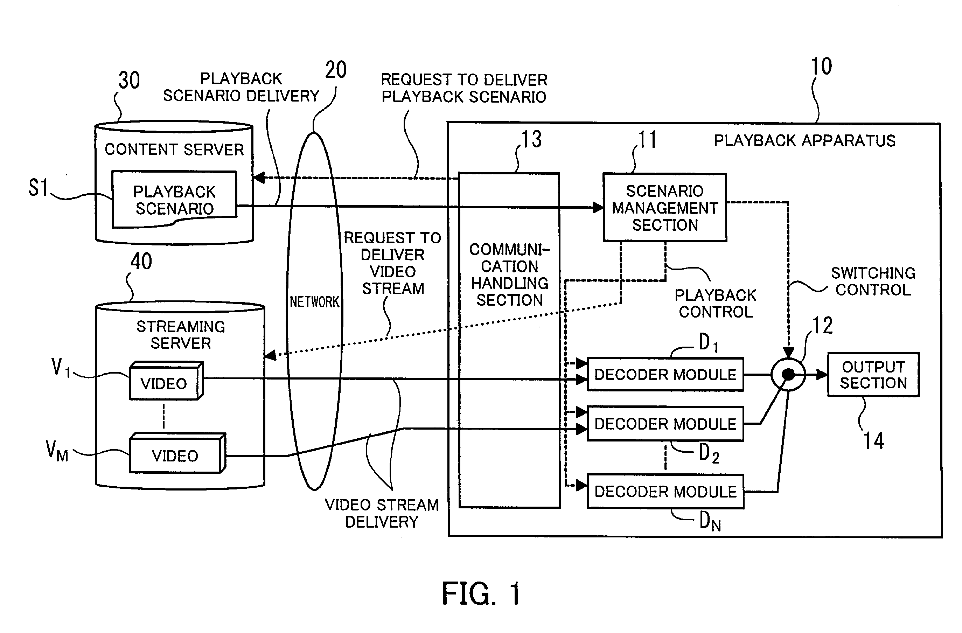

Fig. 1 is a view for describing the principles underlying a playback apparatus according to the present invention and the structure thereof.

A playback apparatus 10 according to the present invention is connected via a network 20, such as the Internet, to a content server 30 which manages a playback scenario S1 and a streaming server 40 which manages a plurality of video sources Vₘ (m=1, ..., M).

In Fig. 1, the flow of data and the flow of a control signal are shown by solid and dotted lines respectively.

The playback apparatus 10 comprises decoder modules Dₙ (n=1, ..., N), a scenario management section 11, a changeover switch 12, a communication handling section 13, and an output section 14.

Each of the decoder modules Dₙ includes a streaming buffer (not shown) and a decoder (not shown) and decodes an encoded streaming video.

The scenario management section 11 reads the playback scenario S1 where playback information regarding the plurality of video sources Vₘ is described, determines a playback schedule according to the playback information, and exercises distribution of the video sources Vₘ among the decoder modules Dₙ and switching control over output from the decoder modules Dₙ.

The changeover switch 12 is used for switching output from the decoder modules Dₙ under switching control exercised by the scenario management section 11.

The communication handling section 13 makes a request via the network 20 to deliver the playback scenario S1, receives the playback scenario S1 via the network 20, makes a request via the network 20 to deliver the video sources Vₘ, and receives the video sources Vₘ via the network 20.

The output section 14 outputs the video sources Vₘ decoded by the decoder module Dₙ selected by the changeover switch 12 to a display (not shown) or the like.

The operation of the playback apparatus 10 will now be described.

When the playback apparatus 10 makes a request to deliver the playback scenario S1, the playback scenario S1 stored in the content server 30 is inputted to the communication handling section 13 via the network 20 and is downloaded into the scenario management section 11. The scenario management section 11 reads and analyzes the playback scenario S1, extracts the video sources Vₘ to be displayed in succession in a content and the time when the video sources Vₘ are to be displayed from playback information described in the playback scenario S1, and rearranges them in order of display time. Then the scenario management section 11 determines the distribution of the video sources Vₘ among the plurality of decoder modules Dₙ, a playback schedule, and a schedule of switching by the changeover switch 12 on the basis of a time lag (ΔS) in displaying the video sources Vₘ managed by the streaming server 40 and time (ΔE) taken to perform a termination process.

Table 1 shows data structure indicative of a video source.

**Table 1**

| | |
|---|---|
| URL | place where video source itself is stored |
| start | playback starting time indicated by general time |
| local_start | playback starting time indicated by video time |
| duration | video playback time |
| decoder | ID of decoder to which video source is distributed |

As shown in Table 1, data structure indicative of the video source Vₘ includes "URL (uniform resource locator)" which indicates a place where the video source Vₘ itself is stored, "start" which indicates playback starting time by general time (scenario time), being the time when a user is watching or listening, "local_start" which indicates playback starting time by video time, being time in the video source Vₘ, "duration" which indicates video playback time, and "decoder" which indicates the ID of a decoder to which the video source Vₘ is distributed. "URL," "start," "local_start," and "duration" are described in a playback scenario and "decoder" is added to the data structure by the scenario management section 11 by the method described later.

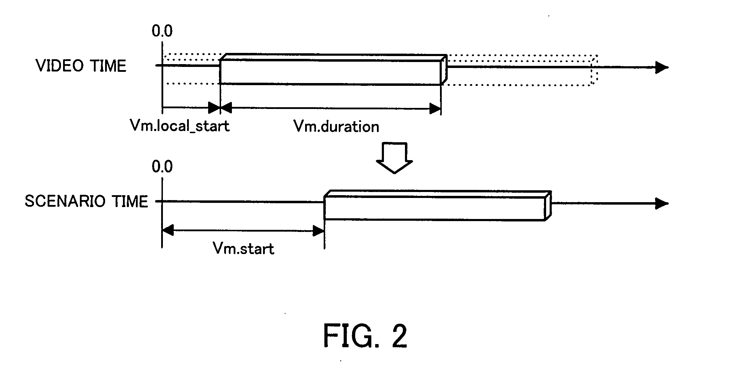

Fig. 2 is a view for describing data structure indicative of a video source.

As shown in Fig. 2, when a user watches, a playback interval in the video source Vₘ specified by "Vₘ.local_start" and "Vₘ.duration" by the video time will be incorporated into time specified by "Vₘ.start" by the scenario time. It is assumed that the M video sources Vₘ have been sorted in ascending order of "start".

At this time the plurality of video sources Vₘ will be distributed among the decoder modules Dₙ in the following way.

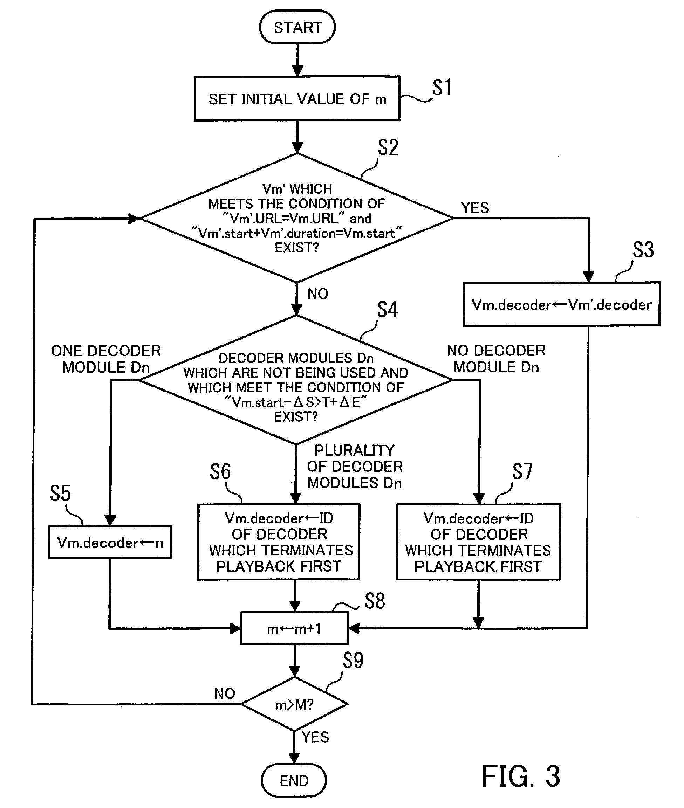

Fig. 3 is a flow chart showing a method for distributing M video sources among N decoder modules.

Descriptions will now be given with video source IDs as m (m=1,..., M) and with decoder IDs as n (n=1,..., N)

When the scenario management section 11 reads the playback scenario S1, the scenario management section 11 sets the initial value of m, being the ID of distributed video sources Vₘ. With static distribution in which all of the video sources Vₘ are distributed before a content being played back, the initial value of m is set to 1. With dynamic distribution in which a playback scenario is added with the playback of a content or according to circumstances, the initial value of m is set to the smallest one of the IDs of video sources which are not yet distributed (step S1).

Next, the video source Vₘ, which has already been distributed and which meets the condition (condition 1) of "V_{m'}.URL=Vₘ.URL" and "V_{m'}.start+V_{m'}.duration=Vₘ.start" is searched for. That is to say, the video source V_{m'} which is stored in the same place as the video source Vₘ and the ending time of which matches the playback starting time of the video source Vₘ is searched for. If there is video source V_{m'} which meets the above condition, then step S3 will be performed. If there is no video source Vₘ, which meets the above condition, then step S4 will be performed (step S2).

If the condition shown in step S2 is met, then the same decoder module that was used to play back the video source V_{m'} should be used to decode the video source Vₘ. Therefore, "Vₘ.decoder←V_{m'}.decoder" is given and the ID of a decoder used to decode the video source Vₘ is the same as the ID of the decoder used to decode the video source Vₘ, (step S3).

If there is no video source V_{m'} which meets the condition shown in step S2, then decoder module Dₙ which is not being used at time "Vₘ.start" is extracted. It is assumed that the last ending time of the decoder module Dₙ is T. Decoder module Dₙ which meets the condition of "Vₘ.start-ΔS>T+ΔE" is searched for. That is to say, decoder module Dₙ which meets the condition that the playback starting time "Vₘ.start" of the video source Vₘ minus time "ΔS" taken to perform an initialization process is greater than its last ending time T plus time ΔE taken to perform a termination process (the margin described later is taken into consideration) is searched for. If there is one decoder module Dₙ which meets the above condition, then step S5 will be performed. If there are a plurality of decoder modules Dₙ which meet the above condition, then step S6 will be performed. If there is no decoder module Dₙ which meets the above condition, then step S7 will be performed (step S4). If there is only one decoder module Dₙ which meets the above condition, it is used for playback. That is to say, "Vₘ.decoder←n" is given (step S5). If there are a plurality of decoder modules Dₙ which meet the above condition, "Vₘ.decoder" is set to the decoder ID of one of them that terminates playback first (step S6). If there is no decoder module Dₙ which meets the above condition, "Vₘ.decoder" is set to the decoder ID of one of all decoder modules Dₙ that terminates playback first (step S7). When the setting of "Vₘ.decoder" in any of steps S5 through S7 is completed, m, being a video source ID, is incremented by 1 (step S8). If m>M, that is to say, if the distributing of all video sources Vₘ is completed, then the process is terminated. If m≤M, then the process will be repeated from step S2 (step S9).

By doing so, a plurality of video sources Vₘ can be distributed among a plurality of decoder modules Dₙ.

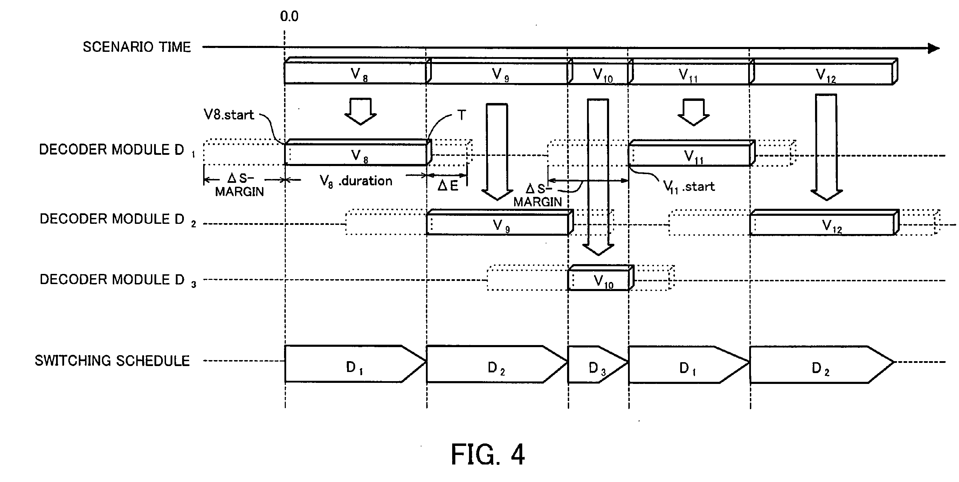

Fig. 4 is a view showing an example in which the distribution method shown in Fig. 3 is applied.

In this example, video sources V₈ through V₁₂ are distributed among a plurality of decoder modules D₁ through D₃.

It is assumed that video sources Vₘ have been extracted and have been rearranged in order of display time in accordance with the playback scenario S1 downloaded.

It is assumed that the video source V₁₁ having the video source ID of 11 is distributed. If there is no video source V_{m'} which meets the condition of "V_{m'}.URL=V₁₁.URL" and "V_{m'}.start+V_{m'}.duration=V₁₁.start" in step S2 shown in Fig. 3, then step S4 will be performed. In this case, of decoder modules Dₙ which are not being used, only the decoder module D₁ having the decoder ID of 1 meets the condition of "V₁₁.start-ΔS>T+ΔE". Therefore, step S5 will be performed and the video source V₁₁ is distributed to the decoder module D₁ to decode.

The scenario management section 11 controls the changeover switch 12 in accordance with a switching schedule shown at the bottom of Fig. 4 to switch output from the decoder modules D₁ through D₃ which decode the video sources V₈ through V₁₂ distributed in this way. This enables a seamless video display.

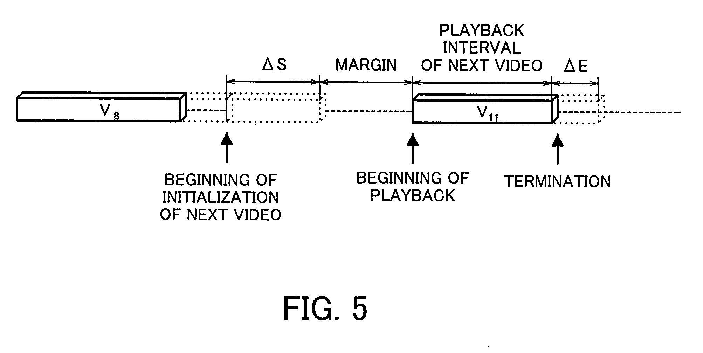

Fig. 5 is a view for describing the timing with which a decoder module is controlled.

For example, with the decoder module D₁ shown in Fig. 4, an initialization process for the next video source V₁₁ is begun some time after a termination process for the video source V₈ is completed. As shown in Fig. 5, however, when a termination process for the video source V₈ is completed and the decoder module D₁ becomes reusable, an initialization process for the next video source V₁₁ will actually be begun.

The other decoder modules Dₙ operate in the same way.

If the rules for distributing the video sources Vₘ are followed, they should go into a state in which they can be played back by the time when playback is begun. However, initialization time includes indefinite factors, such as the occurrence of a network delay, so there is no guarantee that the video sources Vₘ will go into a state in which they can be played back by the time when playback is begun. Accordingly, when a plurality of decoder modules Dₙ can be used, the video sources Vₘ are distributed to decoder modules Dₙ which have not been used for a longer time to allow for a margin against a delay in initialization.

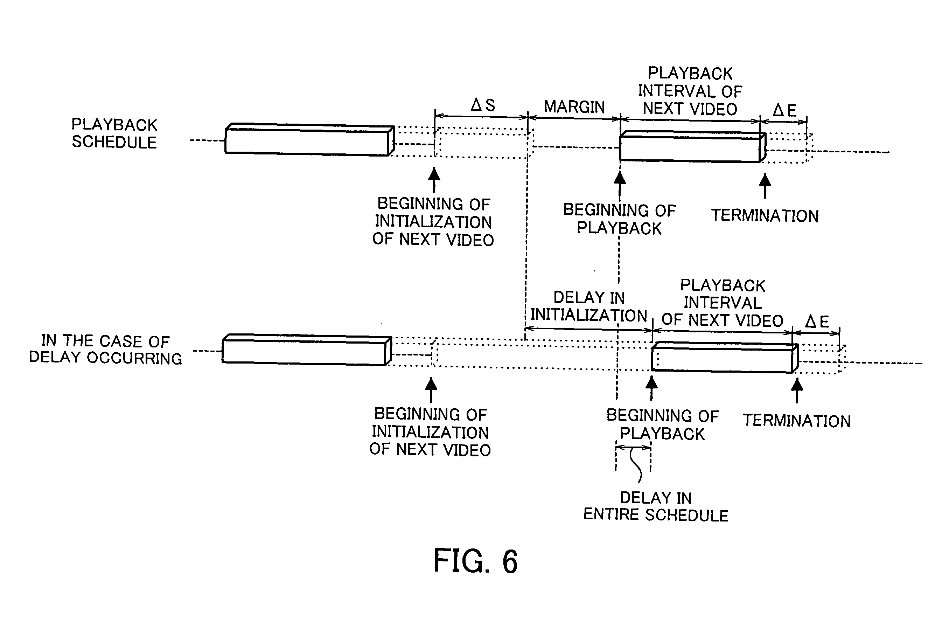

Fig. 6 is a view for describing the timing with which a decoder module is controlled in the case of a delay in initialization exceeding a margin.

If a delay in initialization exceeds a margin allowed for in advance, that is to say, if initialization is not completed by the time when playback is begun, the subsequent processes will be performed by delaying the entire schedule time for the time corresponding to a delay in beginning playback. If such a delay occurs, the subsequent video sources may be redistributed.

A concrete embodiment of the present invention will now be described.

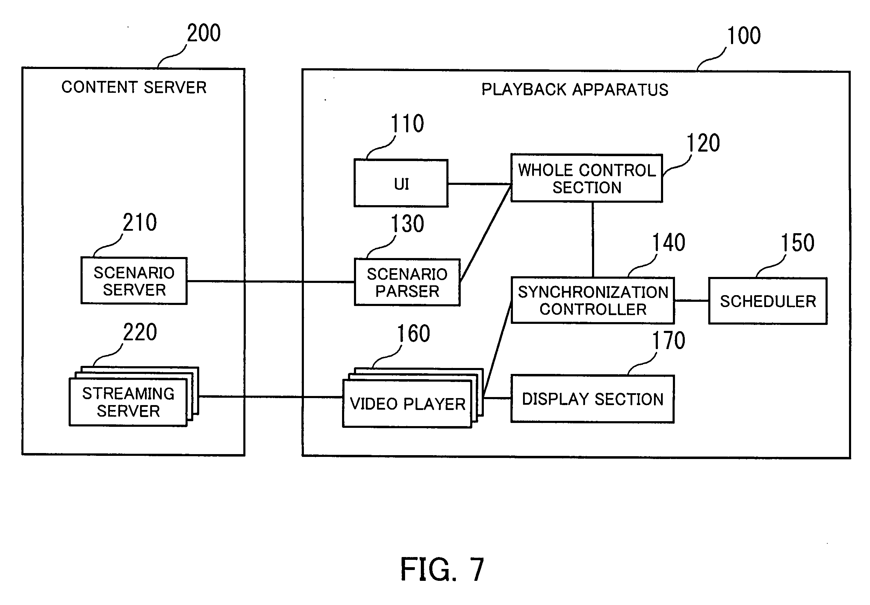

Fig. 7 is a view showing the structure of a playback apparatus according to an embodiment of the present invention.

A playback apparatus 100 according to an embodiment of the present invention is connected to a content server 200 including a scenario server 210 and a streaming server 220.

The scenario server 210 stores a playback scenario in which information included in the data structure indicative of the video sources Vₘ shown in Table 1, excluding "decoder," has been described in the CSV format, the XML format, or the like.

Table 2 shows an example of a playback scenario described in the CSV format.

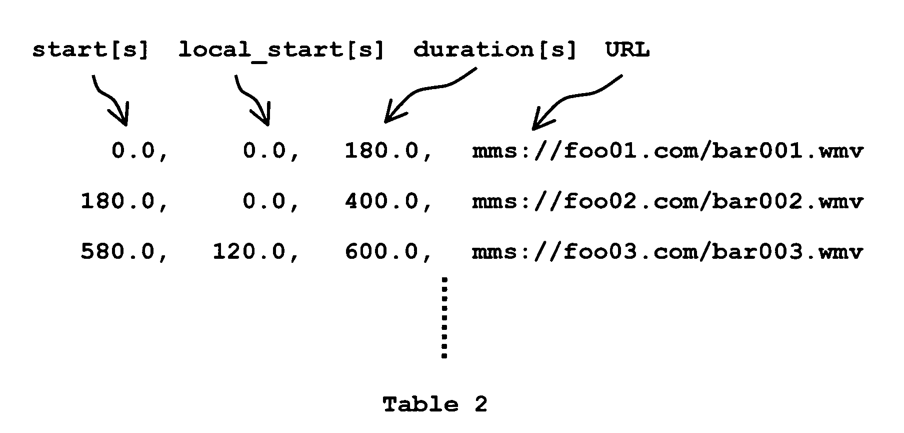

One line indicates one video source Vₘ. Pieces of information indicative of "start," "local_start," "duration," and "URL" are described in that order in seconds and are separated by commas.

The streaming server 220 stores various video contents. An existing product, such as RealServer (trademark of the RealNetworks Inc.) or Windows Media Server (trademark of the Microsoft Corporation), will be used for performing streaming delivery at need. A plurality of servers will be used depending on a playback scenario.

The playback apparatus 100 comprises a user interface 110, a whole control section 120, a scenario parser 130, a synchronization controller 140, a scheduler 150, a video player 160, and a display section 170.

The playback apparatus 100 may be a personal computer or dedicated hardware. If the playback apparatus 100 is a personal computer, then the whole or part of the user interface 110, the whole control section 120, the scenario parser 130, the synchronization controller 140, the scheduler 150, and the video player 160 in the playback apparatus 100 may be described in a downloadable, executable language, such as Java or JavaScript, to download and execute them as each module before downloading a scenario. If the playback apparatus 100 is dedicated hardware, then they will be realized as hardware modules.

The scenario server 210 and streaming server 220 shown in Fig. 7 correspond to the content server 30 and streaming server 40, respectively, shown in Fig. 1. In Fig. 7, the scenario server 210 and streaming server 220 are united into the content server 200. The network 20 shown in Fig. 1 is omitted in Fig. 7.

In the playback apparatus 100 shown in Fig. 7, the user interface 110, the whole control section 120, part of the function of the scenario parser 130, the synchronization controller 140, and the scheduler 150 correspond to the scenario management section 11 shown in Fig. 1. Part of the function of the scenario parser 130 corresponds to the communication handling section 13 shown in Fig. 1. This communication handling section 13 is omitted in Fig. 7. In addition, the video player 160 and the display section 170 correspond to the decoder module Dₙ and the output section 14, respectively.

The user interface 110 enables a user to give instructions to specify a playback scenario to be played back (input URL), instructions to play back a playback scenario, instructions to stop or pause the playback of a playback scenario, or the like. For example, a keyboard, a switch, or a mouse (not shown) will be connected to the user interface 110.

The whole control section 120 is a module for converting instructions from a user inputted by the user interface 110 to operation instructions to each module.

When instructions to read a playback scenario are given, the scenario parser 130 communicates with the scenario server 210, downloads the playback scenario, and converts it to an internal format. For example, an array having the data structure indicative of the video sources Vₘ (m=1,..., M) shown in the above Table 1 can be used as an internal format for a playback scenario. When the scenario parser 130 converts a playback scenario to an internal format, the scenario parser 130 also sorts data in ascending order of "start," being playback starting time by the general time.

The synchronization controller 140 sets data regarding a plurality of video sources Vₘ shown in, for example, Table 1 (excluding "decoder") which is inputted via the whole control section 120 and which has been sorted in ascending order, and controls the operation and output of the video player 160 in accordance with a playback schedule determined by the scheduler 150. Furthermore, the synchronization controller 140 controls the operation of the video player 160 in accordance with instructions from the whole control section 120 to play back a playback scenario or to stop or pause the playback of a playback scenario.

On the basis of data regarding a plurality of video sources Vₘ set in the synchronization controller 140, the scheduler 150 determines by the distribution method described in Fig. 3 which video player 160 plays back each of the plurality of video sources Vₘ.

There are a plurality of video players 160, which corresponds to the fact that a plurality of streaming servers 220 may be used. Under the control of the synchronization controller 140, each video player 160 temporarily stores video sources Vₘ inputted via the network (not shown) in a streaming buffer (not shown) as bit streams corresponding to several seconds to several tens of seconds, decodes them in order of store, and outputs them to the display section 170. By doing so, the instability of the network (not shown) will be alleviated and stable video playback will be performed.

The display section 170 displays video sources Vₘ decoded by the video players 160 on a display (not shown) or the like.

In this embodiment, the same effect that can be obtained by the use of the changeover switch 12 explicitly shown in Fig. 1 is realized by controlling the visibility/invisibility of all the video players 160. Output images are displayed one over another by the display section 170. However, a playback scenario has been set so that one video player 160 will be visible. Therefore, only one video will always be displayed.

The operation of the playback apparatus 100 will now be described.

When the URL of a playback scenario is inputted from the user interface 110, the whole control section 120 gives the scenario parser 130 instructions to read the playback scenario. The scenario parser 130 downloads the playback scenario from the scenario server 210, converts it to an internal format, and sorts a plurality of video sources Vₘ in ascending order of playback starting time by the general time. Data indicative of the plurality of video sources Vₘ read and sorted is set as an object of playback by the synchronization controller 140 via the whole control section 120.

The operation of the synchronization controller 140 will now be described.

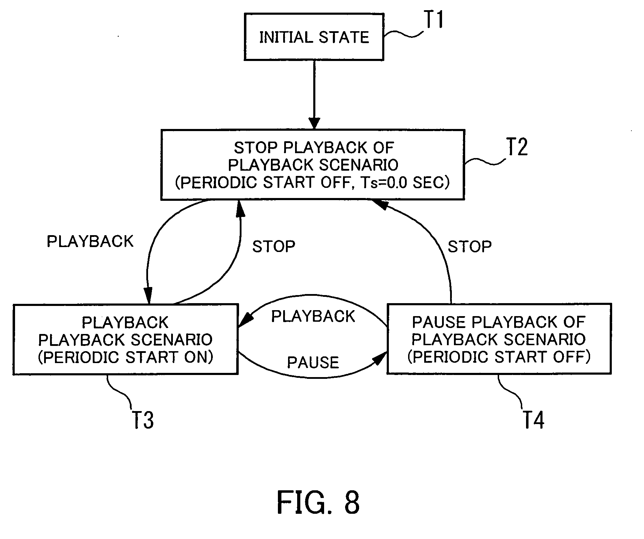

Fig. 8 is the state transition diagram of the synchronization controller.

Each of symbols T1 through T4 indicates a state.

When the synchronization controller 140 is in an initial state (state T1) and a playback scenario is read, data indicative of video sources Vₘ is set as an object of playback and the synchronization controller 140 makes the transition to a state T2. When the synchronization controller 140 is in the state T2, the playback of the playback scenario is in a stopped state. At this time a periodic start turns off and the scenario time goes into an initial state (Ts=0.0 sec). When the synchronization controller 140 is in the state T2 and the whole control section 120 gives instructions to play back the playback scenario, the synchronization controller 140 is started periodically every minute period Δt (several milliseconds, for example) and the playback scenario goes into a played back state (state T3). Therefore, the video players 160 begin to play back and output in accordance with a schedule determined by the scheduler 150. When the whole control section 120 gives instructions to pause the playback of the playback scenario, the periodic start is stopped and the advance of the scenario time stops (state T4). When the whole control section 120 gives instructions to stop the playback of the playback scenario, the synchronization controller 140 makes the transition to the state T2. Accordingly, the periodic start is stopped and the scenario time is returned to the initial state (Ts=0.0 sec). When the playback of the playback scenario is in a paused state (state T4) and the whole control section 120 gives instructions to play back the playback scenario, the synchronization controller 140 makes the transition to the state T3. When the playback of the playback scenario is in a paused state (state T4) and the whole control section 120 gives instructions to stop the playback of the playback scenario, the synchronization controller 140 makes the transition to the state T2.

The playback state (state T3) will now be described in detail.

As stated above, the synchronization controller 140 is started periodically when a playback scenario is in a playback state. When the synchronization controller 140 is started periodically, time which elapsed after the beginning of the playback of the playback scenario is reflected in scenario time Ts. By comparing the scenario time Ts and an array of video sources Vₘ which make up the playback scenario, the operation of the video player 160 indicated by "Vₘ.decoder" is determined on the basis of the following conditions.

If "Vₘ₋₁.start+Vₘ₋₁.duration≤Tₛ<Vₘ.start" (condition 2), that is to say, if the playback of the video source Vₘ₋₁ has been completed, the playback of the next video source Vₘ is not yet performed, and the video player is in a stopped state, then "Vₘ.URL" will be set to perform prefetch.

If "Vₘ.start≤Tₛ<Vₘ.start+Vₘ.duration" (condition 3), that is to say, if the video source Vₘ₋₁ is being played back, then playback will be performed for "Vₘ.local_start+Vₘ.start-Tₛ" seconds by video local time.

If "Vₘ.start+Vₘ.duration≤Tₛ" (condition 4), that is to say, if the video source Vₘ is played back, then the synchronization controller 140 will make the transition to the state T2 (the playback of the playback scenario is in a stopped state).

If m=1, then condition 2 becomes "Tₛ<Vₘ.start".

It is assumed that the video source Vₘ meets condition 4. If there is video source Vₘ₊₁ which meets condition 1 described in step S2 shown in Fig. 3, then the playback of the next Vₘ₊₁ under condition 3 will precede. That is to say, video sources Vₘ having the same URL in "Vₘ.decoder(=Vₘ₊₁.decoder)" will be continuously played back.

Though the transition to a prefetch state is made under condition 2, condition 3 may be met before the transition to a prefetch state being completed. In this case, playback cannot be begun. Therefore, until the transition to a prefetch state is completed, Tₛ will not be increased from "Tₛ=Vₘ.start". As soon as the transition to a prefetch state is completed, the transition to a playback state will be made and an increase of Tₛ will be resumed.

The operation of the video players 160 will now be described.

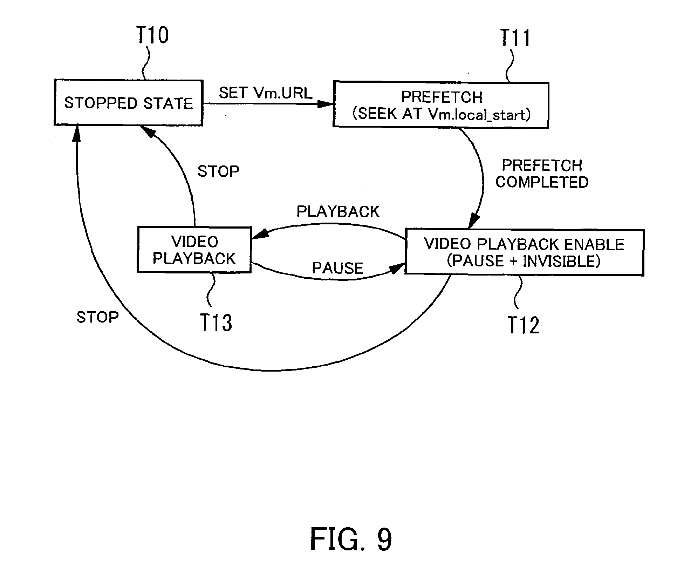

Fig. 9 is the state transition diagram of the video players.

By exercising control, such as playback, pausing playback, stopping playback, or setting a URL, over the video player 160 under the above condition 2, 3, or 4, it makes state transition.

When the video player 160 is in a stopped state (state T10) and "Vₘ.URL" is set, the video player 160 makes the transition to a prefetch state (state T11). In this case, the video player 160 will seek at "Vₘ.local_start," being playback starting time by the video time. When prefetch is completed, the video player 160 makes the transition to a video playback enable state (state T12). At this time the video player 160 is in a paused state and does not provide output to the display section 170. When playback control is exercised over the video player 160 in a video playback enable state, the video player 160 makes the transition to a video playback state (state T13). When stop control is exercised over the video player 160 in a video playback enable state, the video player 160 makes the transition to a stopped state. The video player 160 outputs a video it decoded to the display section 170. When stop control is exercised over the video player 160 in a video playback state, the video player 160 makes the transition to a stopped state. When pause control is exercised over the video player 160 in a video playback state, the video player 160 makes the transition to a video playback enable state.

Moreover, the visibility/invisibility (or output/non-output) of a video played back by the video player 160 can be switched. When the video player 160 is in a video playback state (state T13), a video played back by the video player 160 is visible. When the video player 160 is in another state, a video played back by the video player 160 is invisible.

Dynamic scheduling will now be described.

A case where static scheduling is performed at the time of a playback scenario being set in the synchronization controller 140 has been described. With static scheduling, fixed values are used as the necessary coefficients ΔS and ΔE and individual video sources Vₘ are distributed in advance among the video players 160. However, these values will vary according to network conditions, loads on the streaming servers 220 to which the video players 160 are connected, and the like.

With dynamic scheduling, the video players 160 feed back values actually determined in processes performed theretofore by them to the synchronization controller 140 and these values are reflected in the subsequent scheduling performed by the scheduler 150. As a result, continuous video playback can be performed more flexibly.

The operation of the playback apparatus 100 at dynamic scheduling time will now be described.

When a playback scenario is set, the synchronization controller 140 initially operates the same, whether at static scheduling time or at dynamic scheduling time.

The synchronization controller 140 has a table which stores ΔS and ΔE for each of the streaming servers 220 included in URLs set in the video players 160.

Table 3 is an example of a coefficient store table.

**Table 3**

| server name | ΔS | ΔE |
|---|---|---|
| foo01.com | 15.0sec | 1.0sec |
| foo02.com | 10.0sec | 1.5sec |
| . | . | . |
| . | . | . |
| . | . | . |

The fixed values used in the static scheduling will be used as the initial values of ΔS and ΔE in this table. For example, each time the synchronization controller 140 gives the video player 160 instructions to play back, the synchronization controller 140 inquires the measured value of time from a URL being set to the video player 160 making the transition to a video playback enable state and the measured value of time from instructions to stop being given to the video player 160 making the transition to a stopped state and updates the values of ΔS and ΔE corresponding to the appropriate server name by the use of the newest measured values. To access each coefficient in the coefficient store table, the forms of, for example, ΔS[server name] and ΔE[server name] will be used.

When the values of ΔS and ΔE are updated and values in the coefficient store table change, rescheduling will be performed. Video sources "Vₘ*.URL" which are not yet set in the video players 160 are to be rescheduled. That is to say, the video sources V_{m*}, V_{m*+1},..., V_{M} will be rescheduled and scheduling will be performed with m* as the initial value of m.

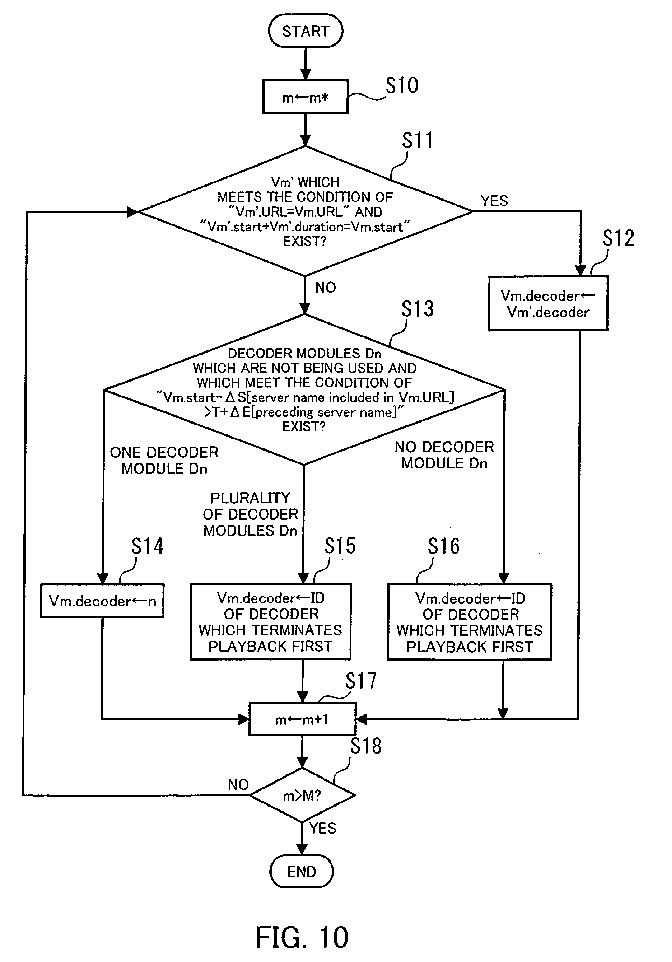

Fig. 10 is a flow chart showing a method for distributing M video sources among N decoder modules in dynamic scheduling.

The flow chart shown in Fig. 10 differs from that shown in Fig. 3 only in steps S10 and S13.

As stated above, video sources "V_{m*}.URL" which are not yet set in the video players 160 are to be rescheduled in step S10. That is to say, the video sources V_{m*}, V_{m*+1},..., V_{M} will be rescheduled, so the initial value of m will be set to m*.

In step S13, decoder module Dₙ which is not being used is searched for. This is the same with step S4 in Fig. 3. In this case, however, ΔS and ΔE are set according to the state of the streaming servers 220 at access time by the use of the condition of "Vₘ.start-ΔS[server name included in Vₘ.URL]>T+ΔE[preceding server name]".

The other processes are the same as those in the distribution method shown in Fig. 3, so descriptions of them will be omitted.

As described above, by determining ΔS and ΔE on the basis of measured values obtained in processes performed before communication with the streaming servers 220 and by feeding back them to the synchronization controller 140, continuous playback in which the newest streaming state of the appropriate server is reflected can be realized.

Static scheduling may be performed by the use of a coefficient store table in which the values of the coefficients for each server are fixed. In this case, scheduling is realized by using the flow chart in Fig. 10 on which m* is set to 1. Values measured for each streaming server 220 should be used as the fixed coefficients in the coefficient store table. In addition, values in this fixed coefficient store table may be used as initial values in a coefficient store table at dynamic scheduling time.

In the above descriptions it has been assumed that delivery of the entire playback scenario was completed before the playback of the playback scenario. However, the playback scenario can be considered as a set of a plurality of scenario Sp (p=1, 2,...). In this case, even before the entire playback scenario is delivered, partial scenarios Sp delivered in order can be executed.

The scenario server 210 manages the playback scenario as a set of partial scenarios Sp (p=1, 2 , ...). Partial scenarios Sp may be stored in advance or may be generated in order at calling time.

When the whole control section 120 gives the scenario parser 130 instructions to read the playback scenario, the scenario parser 130 begins to read the playback scenario and obtains a partial scenario Sp. The partial scenario Sp is sent to the synchronization controller 140, is distributed to a video decoder by static or dynamic scheduling, and is played back.

The whole control section 120 gives the scenario parser 130 instructions every certain period of time to read the partial scenario Sp subsequent to the one which the scenario parser 130 has already received. If there is no partial scenario Sp read, then there will be nothing to be changed. If there is a partial scenario Sp read, then the whole control section 120 sets the partial scenario Sp in the synchronization controller 140. The synchronization controller 140 combines partial scenarios Sp which have already been set therein and the partial scenario Sp newly set, performs dynamic scheduling on the combined partial scenarios Sp, and continues its playback. A scheduling method used in this case is the same as that shown in Fig. 10.

Partial scenarios Sp may be delivered from the scenario server 210 in push mode. In this case, partial scenarios Sp delivered in push mode are parsed by the scenario parser 130 and are processed in the same way that was described above.

The above functions can be realized with a computer. In this case, a program in which the contents of the functions the playback apparatus 100 should have are described is provided. By executing this program on a computer, the above functions are realized on the computer. This program can be recorded on a computer readable record medium. A computer readable record medium can be a magnetic recording device, an optical disk, a magneto-optical recording medium, a semiconductor memory, or the like. A magnetic recording device can be a hard disk drive (HDD), a flexible disk (FD), a magnetic tape, or the like. An optical disk can be a digital versatile disc (DVD), a digital versatile disc random access memory (DVD-RAM), a compact disc read only memory (CD-ROM), a compact disc recordable (CD-R)/rewritable (CD-RW), or the like. A magneto-optical recording medium can be a magneto-optical disc (MO) or the like.

To place the program on the market, portable record media, such as DVDs or CD-ROMs, on which it is recorded are sold. Alternatively, the program is stored in advance on a hard disk in a server computer and is transferred to another computer via a network.

When a computer executes this program, it will store the program, which is recorded on a portable record medium or which is transferred from a server computer, on, for example, its hard disk. Then it reads the program from its hard disk and performs processes in compliance with the program. A computer can also read the program directly from a portable record medium and perform processes in compliance with the program. Furthermore, each time the program is transferred from a server computer, a computer can perform processes in turn in compliance with the program it received.

As has been described in the foregoing, in the present invention, a plurality of video sources delivered via a network can continuously be played back in the order which is described in a playback scenario without non-display time at each video joint.

Furthermore, scheduling for distributing a plurality of video sources among a plurality of decoder modules is performed, so flexible continuous playback can be realized without describing a playback schedule in advance in a playback scenario.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

## Claims

1. A playback apparatus for receiving and playing back a plurality of pieces of video information delivered via a network, the apparatus comprising:
a plurality of decoder modules for decoding the plurality of pieces of video information;
a scenario management section for reading a playback scenario where playback information regarding the plurality of pieces of video information is described, for determining a playback schedule according to the playback information, and for exercising distribution of the plurality of pieces of video information among the plurality of decoder modules and switching control over output from the plurality of decoder modules;
an output switching section for switching output from the plurality of decoder modules under the switching control;
a communication handling section for making a request via the network to deliver the playback scenario, receiving the playback scenario via the network, making a request via the network to deliver the plurality of pieces of video information, and receiving the plurality of pieces of video information via the network; and
an output section for outputting the plurality of pieces of video information.

2. The playback apparatus according to claim 1, wherein the scenario management section determines the playback schedule so that the temporally adjacent pieces of video information will be played back by the different decoder modules.

3. The playback apparatus according to claim 1, wherein the scenario management section selects the plurality of decoder modules which decode the plurality of pieces of video information on the basis of initialization time each of the plurality of decoder modules takes to change from an initial state to a state in which each of the plurality of decoder modules can output the plurality of pieces of video information as images and termination time each of the plurality of decoder modules takes to terminate the output and to return to the initial state.

4. The playback apparatus according to claim 1, wherein the scenario management section has a coefficient store table in which the fixed values of the initialization time and the termination time for each streaming server are stored and distributes the plurality of pieces of video information in advance among the plurality of decoder modules by the use of coefficient values stored in the coefficient store table.

5. The playback apparatus according to claim 1, wherein the scenario management section has a coefficient store table in which the initialization time and the termination time for each streaming server are updated in order by the use of measured values for the plurality of decoder modules and updates the playback schedule of the plurality of pieces of video information which are not yet displayed at the time of a coefficient value in the coefficient store table being updated.

6. The playback apparatus according to claim 1, wherein the communication handling section receives partial scenarios which are obtained by dividing the playback scenario in order of time and which are delivered in order, further wherein the scenario management section combines the partial scenarios and a scenario which has already been received and updates the playback schedule.

7. The playback apparatus according to claim 1, wherein the scenario management section starts periodically, determines a state of each of the plurality of decoder modules according to scenario time, and controls each of the plurality of decoder modules so that each of the plurality of decoder modules will make the transition to the state the scenario management section determined.

8. The playback apparatus according to claim 7, wherein the scenario management section determines the state on the basis of the scenario time and the playback schedule.

9. The playback apparatus according to claim 7, wherein if each of the plurality of decoder modules is not in a playback enable state in spite of the determination that the state should be a playback state being made, the scenario management section stops the scenario time until each of the plurality of decoder modules makes the transition to the playback enable state.

10. A playback method for receiving and playing back a plurality of pieces of video information delivered via a network, the method comprising the steps of:
reading a playback scenario in which playback information regarding the plurality of pieces of video information is described and which is delivered via the network;
determining a playback schedule according to the playback information; and
exercising, in accordance with the playback schedule, distribution of the plurality of pieces of video information among a plurality of decoder modules and switching control over output from the plurality of decoder modules.

11. A playback program for receiving and playing back a plurality of pieces of video information delivered via a network, the program causing a computer to perform the processes of:
reading a playback scenario in which playback information regarding the plurality of pieces of video information is described and which is delivered via the network;
determining a playback schedule according to the playback information; and
exercising, in accordance with the playback schedule, distribution of the plurality of pieces of video information among a plurality of decoder modules and switching control over output from the plurality of decoder modules.

12. A computer-readable record medium that stores a playback program for receiving and playing back a plurality of pieces of video information delivered via a network, the program causing a computer to perform the processes of:
reading a playback scenario in which playback information regarding the plurality of pieces of video information is described and which is delivered via the network;
determining a playback schedule according to the playback information; and
exercising, in accordance with the playback schedule, distribution of the plurality of pieces of video information among a plurality of decoder modules and switching control over output from the plurality of decoder modules.

13. A video information playback system for playing back a plurality of pieces of video information delivered via a network, the system comprising:
a content server that stores a playback scenario in which playback information regarding the plurality of pieces of video information is described;
a streaming server that stores the plurality of pieces of video information; and
a client including a plurality of decoder modules for continuously playing back the plurality of pieces of video information by receiving the playback scenario and the plurality of pieces of video information via the network, by determining a playback schedule according to the playback information, and by performing, in accordance with the playback schedule, distribution of the plurality of pieces of video information among the plurality of decoder modules and the switching of output from the plurality of decoder modules.
